# FASCICULE DE BREVET EUROPEEN

(11) **EP 3 525 602 B1**
(45) Date de publication et mention de la délivrance du brevet: **27.01.2021**
(21) Numéro de dépôt: 17794373.5
(22) Date de dépôt: 11.10.2017
(51) Int. Cl.: A23L 27/40, A23L 27/14

(54) **CONDIMENT HYPOSODÉ AROMATISÉ**
NATRIUMARMES AROMATISCHES GEWÜRZ
LOW SODIUM AROMATIC CONDIMENT

(30) Priorité: 12.10.2016 FR 1659856
(43) Date de publication de la demande: 21.08.2019
(73) Titulaire: Compagnie Des Salins Du Midi Et Des Salines De L'Est, 92115 Clichy Cédex (FR)
(72) Inventeur: BROQUET, Laurent, 34070 Montpellier (FR)
(74) Mandataire: LLR
(86) Numéro de dépôt international: PCT/FR2017/052801
(87) Numéro de publication internationale: WO 2018/069648

(56) Documents cités:
- FR-A1- 2 973 989
- FR-A1- 2 989 556
- US-A1- 2004 047 976
- US-A1- 2010 247 709
- US-A1- 2016 242 447
- DESMOND ET AL: "Reducing salt: A challenge for the meat industry", MEAT SCIENCE, ELSEVIER SCIENCE, GB, vol. 74, no. 1, 1 septembre 2006 (2006-09-01), pages 188-196, XP027989851, ISSN: 0309-1740 [extrait le 2006-09-01]

## Description

### Domaine de l'invention

L'invention se rapporte d'une manière générale à une composition minérale hyposodée comprenant des composés aromatiques, choisis parmi les herbes aromatiques et qui, utilisée en tant que condiment d'aliments variés, permet une alimentation plus saine et goûteuse.

En particulier, l'invention concerne un condiment hyposodé aromatisé dans l'industrie alimentaire ou son utilisation directement par le consommateur.

### Art antérieur

De nombreuses études scientifiques ont démontré une corrélation entre une consommation excessive de sel (NaCl) et les maladies cardio-vasculaires qui sont, de nos jours, un véritable problème de santé publique. Malgré des efforts pour réduire la consommation moyenne de sel par jour de la population française, celle-ci, aux environs de 7 g par jour, est encore bien supérieure aux recommandations de l'Organisation Mondiale de la Santé, à savoir de 5 g par jour.

Cette surconsommation de sel est principalement due à des changements de mode alimentaire tel que le détournement de la cuisine traditionnelle, au profit d'une cuisine plus rapide et plus industrialisée : fréquentation de fast-food, consommation de plats cuisinés, etc.

Afin de réduire les risques liés à la surconsommation de sel, il a été proposé de diminuer les apports journaliers en sel (NaCI), en utilisant entre autre des compositions pouvant se substituer au sel. Parmi celles-ci, on trouve notamment des sels de substitution appauvris en chlorure de sodium, mais enrichis en sels de potassium.

A cet effet, on a proposé dans l'état de la technique :
le document GB 2237720 qui décrit un sel de substitution contenant, en poids de la composition finale, 46,6 % de NaCl, 6,5 % de MgCl2, 2,8 % de MgSO4, 2,2 % de CaSO4, 41,5 % de KCl, 0,10 % de MgBr2, et 0,2 % de CaCO3, ou la composition commerciale comprenant 33,3 % de NaCl + 66,6% de KCl.
Toutefois, la recherche d'un sel de substitution est difficile à mettre en œuvre. Elle nécessite de trouver des composés qui compensent au mieux le déficit en goût provoqué par la faible proportion de chlorure de sodium, tout en maintenant les fonctions techniques du sel dans les industries agro-alimentaires.

On observe que les compositions de substitut de sel de l'art antérieur présentent des qualités gustatives limitées et n'arrivent pas à égaler le pouvoir salant du vrai sel. Typiquement, ces compositions présentent des « faux goûts », tel que l'amertume, qui altèrent le goût du sel.

Dans le brevet FR1253735, la demanderesse a déterminé qu'un mélange de quantités particulières de NaCl, KCl, MgSO4 et CaSO4 pouvait permettre de résoudre, en tout ou partie, ce problème de faux-goût.

Une autre manière de faire baisser la consommation de sel est de proposer des condiments aromatiques salés, les aromes permettant de compenser la baisse de la saveur salée. Cependant la combinaison de minéraux de remplacement du sel, tels que des chlorures et des sulfates avec des composés organiques aromatiques, aboutit à des résultats dont les propriétés organoleptiques sont, en grande partie, imprévisibles. En effet le goût du chlorure de potassium est généralement perçu comme mauvais. Le sulfate de calcium a un goût très astringent et le sulfate de magnésium un goût très amer et piquant.

On souhaite donc pouvoir offrir un condiment combinant la perception d'un goût salé (et/ou d'exhausteur de goût) à celui d'un ou plusieurs composés aromatiques et qui comprend, en poids, une quantité de sel très réduite associée à des qualités organoleptiques satisfaisantes où le goût du sel, présent, ne domine pas sur l'arôme.

### Description de l'invention

L'invention porte sur un condiment comprenant, ou consistant essentiellement en, un mélange de chlorure de sodium (sel), de sulfate de calcium hydraté (CaSO₄*2H₂O), et éventuellement de sulfate de magnésium hydraté (MgSO4*7H₂O), associé à au moins un composé organique aromatique choisi dans le groupe constitué par les herbes aromatiques.

L'invention concerne un condiment hyposodé aromatisé, de préférence solide, comprenant, ou étant essentiellement constitué par, un mélange :
- de 19 % à 34 % en poids de NaCl ;
- de 32 % à 65 % en poids soit de CaSO₄*2H₂O, soit d'un mélange de CaSO₄*2H₂O et de MgSO4*7H₂O; et
- de 1% à 15 % en poids d'un composé organique aromatique, ledit composé étant choisi dans le groupe constitué par les herbes aromatiques.

Les proportions de ces composés sont données par rapport au poids total du condiment.

Les termes de « sulfate de calcium » et de « sulfate de magnésium » sont les termes usités dans le domaine des condiments alimentaires pour désigner certaines formes hydratées de ces composés cristallins. Le terme « sulfate de calcium » désigne une structure dihydratée de formule CaSO₄*2H₂O. Le terme « sulfate de magnésium » désigne la structure heptahydratée MgSO4*7H₂O. Dans la présente demande ces termes de sulfates de calcium ou de magnésium désignent spécifiquement les formes hydratées suscitées.

Le condiment peut ne comprendre essentiellement comme sulfate(s) que du sulfate de calcium, ou alternativement, une partie du sulfate de calcium peut être remplacée par du sulfate de magnésium. Ainsi, dans ce cas, le condiment selon l'invention comprend, ou est essentiellement constitué par :
- de 19 % à 32 % en poids de NaCl ;
- de 32 % à 53 % en poids de CaSO₄*2H₂O ;
- de 1 % à 12 % en poids de MgSO4*7H₂O; et
- de 2 % à 14 % en poids d'un composé organique aromatique.

Les proportions de ces composés sont données par rapport au poids total du condiment.

Par « condiment » on entend un produit destiné à assaisonner, qui relève la saveur des aliments. Le condiment selon l'invention est une composition minérale et aromatique destinée à une telle utilisation. Cependant une composition minérale et aromatique ayant la formulation décrite est également un objet de l'invention indépendamment de son utilisation.

Par « hyposodé » on entend que la proportion de sel (ou NaCl) comprise dans le condiment est inférieure ou égale à 35% du poids total de la composition, de préférence inférieure ou égale à 33%, et encore plus préférablement inférieure ou égale à 30%. Le sel est préférablement d'origine marine. On peut utiliser du sel très fin (la taille des grains est inférieure à 250 µm), du sel fin (la taille des grains peut aller de 160µm à 900 µm) ou des grains de taille plus grosse (grains allant de 1,25 à 2 mm, « gros sel »).

Une composition comprenant 30% en poids de NaCl, 60% en poids de CaSO₄*2H₂O (ou 50% de CaSO₄*2H₂O et 10% de MgSO₄*7H₂O) et 10% d'herbes aromatiques constitue un condiment présentant particulièrement de bonnes propriétés organoleptiques ainsi qu'une bonne présentation visuelle (en particulier une absence d'effet « nuage de poussière »). Selon une variante de l'invention ces proportions peuvent varier de plus ou moins 5%, de préférence plus ou moins 3%, en poids par rapport au poids total de la composition.

De manière particulièrement avantageuse la taille des grains (granulométrie) peut être choisie de manière spécifique pour améliorer les propriétés organoleptiques du condiment. Ainsi le sel choisi peut être constitué d'un mélange de sel très fin et de gros sel. Le sel très fin augmente le pouvoir salant et le gros sel la perception salée chez l'utilisateur. Le résultat est une synergie qui améliore la sensation salée par rapport à l'utilisation d'un sel fin normal. Ainsi le sel se présente pour environ moitié sous la forme de grains de sel très fins, dont la taille des grains est inférieure à 250 µm, et pour moitié de gros sel, dont la taille des grains va de 1,25 à 2 mm, cette proportion relative dudit sel très fin et dudit gros sel étant en poids.

Cette proportion peut varier d'environ 10% sans altérer de façon sensible l'effet avantageux de cette combinaison.

Le condiment se présente avantageusement sous une forme générale solide de granulats, de poudres, de flocons ou d'un mélange de telles formes. Une telle présentation permet notamment l'assaisonnement des aliments et autres préparations culinaires par saupoudrage. Selon une caractéristique optionnelle de l'invention, le condiment est essentiellement sous la forme de particules. Plus particulièrement au moins 50 % en poids total du condiment est sous forme de particules de granulométrie comprise entre 0,1 et 6 mm de diamètre, de préférence comprise entre 0,1 et 3 mm de diamètre et avantageusement entre 0,1 et 2mm de diamètre.

De préférence, le sulfate de calcium CaSO₄*2H₂O est présent dans le condiment dans des proportions de 60% ± 5% en poids dans un condiment sans sulfate de magnésium, et dans des proportions de 50% ± 3% en poids, de préférence ± 2%, lorsque le condiment comprend du sulfate de magnésium. Ces proportions sont données par rapport au poids total du condiment.

Le sulfate de magnésium MgSO₄*7H₂O peut éventuellement être présent dans des proportions avoisinant 10% ± 2% en poids, de préférence ± 1%. Ces proportions sont données par rapport au poids total du condiment.

Les sulfates sont avantageusement sous formes de poudres et de granulés dont la taille peut varier entre 160 µm et 800 µm. Selon un aspect particulier de l'invention ces sulfates sont d'origine marine.

Le composé organique aromatique est un composé solide d'origine végétale choisi dans le groupe constitué par les herbes aromatiques, et est en particulier issu de l'agriculture biologique. Le composé organique peut être choisi dans le groupe constitué par : l'ail, l'ail aux ours (*Allium ursinum*)*,* l'aneth, la graine d'aneth, l'angélique, l'anis, la badiane, le basilic, la cannelle, la cardamone, le carvi, la graine de céleri, le cerfeuil, le chili, la ciboulette, la citronnelle, la coriandre, le cumin, le cumin noir, le curcuma, le curry en poudre, l'échalote, l'estragon, le fenouil, la graine de fenouil, le fenugrec, le clou de girofle, le gingembre, le laurier, la livèche, la marjolaine, la menthe, la menthe poivrée, la mélisse, le millepertuis, la moutarde, le myrte, la noix de muscade, l'oignon, l'origan, l'oseille, le paprika, le persil, le piment, la pimprenelle, le poivre, le poivre noir, le poivre gris, le poivre vert, le poivre blanc, le poivre rouge, le poivre rose, le piment, le piment de Cayenne, le piment de la Jamaïque, le romarin, le safran, la sarriette, la sauge, le tamarin, le thym et leurs mélanges.

De préférence il s'agit d'un composé choisi dans le groupe constitué par l'ail, l'ail aux ours, le basilic, le carvi, la graine de céleri, le cerfeuil, le chili, la ciboulette, la coriandre, le cumin, le cumin noir, le curcuma, le curry en poudre, l'échalote, l'estragon, le fenouil, la graine de fenouil, le fenugrec, le clou de girofle, le laurier, la livèche, la marjolaine, la menthe, la menthe poivrée, la moutarde, la noix de muscade, l'oignon, l'origan, le paprika, le persil, le piment, le poivre, le poivre noir, le poivre gris, le poivre vert, le poivre blanc, le poivre rouge, le poivre rose, le piment, le piment de Cayenne, le piment de la Jamaïque, le romarin, le safran, la sarriette, la sauge, le tamarin, le thym et leurs mélange.

De préférence il s'agit d'un composé choisi dans le groupe des herbes aromatiques, telles que le basilic, le cerfeuil, la ciboulette, la coriandre, l'estragon, le laurier, la livèche, la marjolaine, la menthe, la menthe poivrée, le persil, le romarin, la sarriette, la sauge, le thym et leurs mélanges.

Le composé organique aromatique peut être un mélange de plus de deux composés organiques, de préférence de plus de deux herbes aromatiques (c'est-à-dire 3, 4, 5, etc...). L'obtention d'un goût aromatique acceptable pour un condiment hyposodé peut être délicate. Un mélange d'estragon, de sarriette, de sauge et de thym est particulièrement adapté à l'obtention d'un goût salé agréable qui ne neutralise ni ne domine le goût des herbes aromatiques. Ces composés ont été utilisés dans des proportions relatives équivalentes, par exemple 2,5% en poids par rapport au poids total du condiment pour chacune des 4 herbes.

Le composé organique aromatique est de préférence utilisé sec ou séché de manière à ne pas dissoudre les ingrédients minéraux de la composition.

Il est particulièrement avantageux d'utiliser ce ou ces composés aromatiques sous la forme de poudre ou de flocon. En effet, un tel mélange permet de conserver au condiment selon l'invention un aspect visuel agréable en présentant peu de démélange dans le container (par exemple salière) et peu de poussières lors de l'utilisation (le saupoudrage d'aliments). Un rapport relatif en poids de la poudre et des flocons de « 1 » montre des résultats particulièrement positifs. Ainsi, le composé organique aromatique peut comprendre au moins un tiers, de préférence la moitié ou au moins la moitié, de son poids par rapport au poids total du composé aromatique, (qui est de préférence une herbe aromatique ou d'un mélange de celles-ci), sous forme de particules dont la taille est supérieure à 800µm, de préférence supérieure à 1mm, avantageusement de 1 à 3 mm. Le composé organique aromatique est de préférence séché ou déshydraté.

De manière inattendue et imprévisible, la présence d'un composé aromatique sous la forme décrite ci-avant permet de ne pas recourir à l'utilisation d'agent antiagglomérant ou d'agent de coulabilité dans le condiment selon l'invention.

Par «agents antiagglomérants», on entend des substances utilisées pour empêcher l'agglomération des cristaux de sel, et ainsi empêcher la reprise en masse.

Par exemple, les agents antiagglomérants sont choisis parmi le groupe constitué par le ferrocyanure de sodium (Na₄Fe(CN)₆), le ferrocyanure de potassium (K₄Fe(CN)₆), et le ferrocyanure de calcium (Ca₂Fe(CN)₆).

Par «agents de coulabilité», on entend des agents permettant d'améliorer la coulabilité des sels, que ce soit pour faciliter sa sortie des trous d'une salière ou pour faciliter son utilisation sur une machine industrielle.

Par exemple, les agents de coulabilité sont choisis parmi le groupe constitué par les carbonates de calcium (CaCO₃ / Ca(HCO₃)₂), les carbonates de sodium (Na₂CO₃ /NaHCO₃), les carbonates de magnésium (MgCO₃ / 4MgCO₃Mg(OH)₂), l'oxyde de magnésium (MgO) et le dioxyde de silicium (SiO₂, nH₂O).

L'homme du métier sait déterminer sans ambiguïté les composés présents dans une composition de sel qui sont soit des agents antiagglomérants, soit des agents de coulabilité.

Selon un autre aspect de l'invention, et si nécessaire, le condiment peut comprendre un additif (un composé ne modifiant pas sensiblement le goût), c'est-à-dire, par exemple, un composé de l'iode (iodure de potassium, iodure de sodium, iodate de sodium ou iodate de potassium), un agent antiagglomérant, un agent de coulabilité, le fluorure de potassium et le nitrite de sodium, seul ou en mélanges. Le condiment est alors un condiment additivé.

La quantité d'additif à utiliser peut être le quantum satis (quantité suffisante et nécessaire). Généralement cette quantité est l'objet d'une réglementation et est inférieure ou égale à 1,5 % du poids total du condiment avec additif(s). Selon une caractéristique optionnelle de l'invention, la quantité totale d'additif(s) est inférieure à 1,5 % en poids total du substitut de sel avec additif.

De préférence, ces additifs sont utilisés de 0,0005 % à 1%, de préférence de 0,01% à 0,5% en poids total du substitut de sel avec additif.

Selon une autre variante de l'invention, les additifs sont conventionnellement constitués par les composés chimiques spécifiques précités, à l'exclusion d'autres composés.

Aucun de ces additifs n'est obligatoire. Ils sont tous optionnels à la composition. Selon un aspect particulier préféré de l'invention, le condiment selon l'invention ne contient pas de chlorure de potassium KCl, excepté éventuellement sous forme de traces.

L'invention porte non seulement sur le condiment et/ou la composition hyposodée décrite en tant que tel mais également sur son utilisation dans le domaine culinaire et l'industrie alimentaire ainsi que sur un procédé d'aromatisation d'un aliment comprenant l'adjonction d'un tel condiment audit aliment.

L'invention porte également sur la fabrication du condiment. Cette fabrication est simple et peut être réalisée par simple mélange mécanique de ses composants jusqu'à l'obtention d'un mélange de particules, granules ou granulés répartis de manière homogène (vérification visuelle). Selon un aspect préféré, un peu d'eau (par exemple de 0.5 à 1% du poids total du condiment) peut être ajouté au mélange de solide ce qui permet de fixer les grains les plus fins à d'autres et limiter l'effet de « nuage de poussière » lors de l'utilisation du condiment. Il convient cependant d'indiquer qu'une diminution sensible du phénomène « nuage de poussière » a été observée indépendamment d'une utilisation d'eau simplement par l'utilisation d'herbes aromatiques décrite ci-dessus.

Il est également considéré d'ajouter plus de 1% en poids d'eau au condiment pour fixer les poussières mais dans ce cas une étape de séchage additionnelle doit être considérée.

Ainsi un aspect de l'invention porte sur un procédé de fabrication du condiment décrit dans la présente demande qui est obtenu par mélange mécanique des composants du condiment jusqu'à l'obtention d'un mélange homogène. De préférence le procédé comprend une étape subséquente ou simultanée d'ajout d'un peu de liquide tel que de l'eau au mélange, dans une proportion qui peut être par exemple de 0.5 à 1% du poids total du condiment.

L'invention sera mieux comprise à la lecture de la description qui va suivre, donnée uniquement à titre d'exemple.

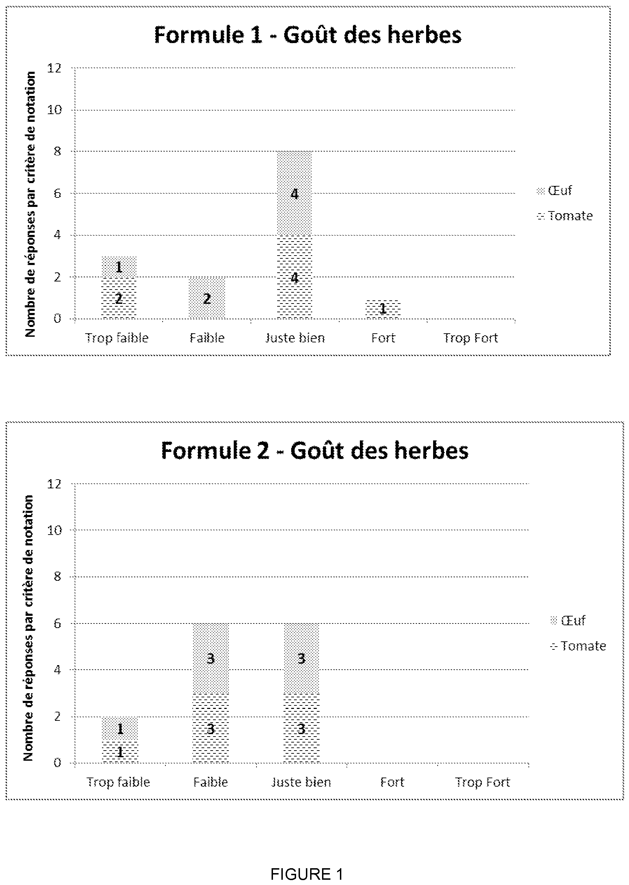

La figure 1 présente sous forme de diagramme les résultats du test comparatif mené à l'exemple 1.

### Exemple 1

40 g d'une composition minérale hyposodée selon l'invention pour son utilisation en tant que condiment a été réalisée comme suit :
- pesée dans un sachet de 12 g de sel NaCl,
   - pesée dans le même sachet de 20 g de CaSO₄*2H₂O,
   - pesée dans le même sachet de 4 g de MgSO₄* 7H₂O,
   - mélange manuel de l'ensemble de ces minéraux dans le sachet,
- rajout dans le sachet de 1 g de sauge en poudre et de 1 g de sarriette en poudre,
   - rajout dans le sachet de 1 g de thym en flocon et de 1 g d'estragon en flocon.
   - mélange final manuel.

Les minéraux utilisés se présentent sous forme d'une poudre.

La poudre de NaCl est constituée d'un mélange de 6 g de sel très fin (taille des grains inférieure à 250 µm) et de 6 g de gros sel dont la taille des cristaux varie de 1,25 à 2 mm.

Les sulfates de calcium et de magnésium sont sous forme de poudre fine, c'est-à-dire qui passent dans un tamis 800 µm. La taille des grains d'une telle poudre est essentiellement comprise entre 160 et 800 µm.

Ces minéraux sont fabriqués par la société déposante, la compagnie des salins du midi et des salines de l'est et sont d'origine marine. Cependant ces minéraux sont des additifs alimentaires qui peuvent être aisément obtenus dans ce secteur.

Les herbes aromatiques sont des herbes séchées provenant de l'agriculture biologique. La poudre de sauge présente une granulométrie inférieure à 800 µm pour 95% en poids. La poudre de sarriette présente une granulométrie inférieure à 500 µm pour 90% en poids . Les flocons de feuilles coupées de thym ont une taille de 1 à 3 mm et celles d'estragon une taille d'environ 3 mm.

Il a été observé que le condiment ainsi obtenu présentait très peu de poussières, et avait un aspect homogène ainsi qu'une bonne coulabilité alors qu'aucun additif n'a été employé.

### Test Comparatif

Pour mettre en évidence les qualités organoleptiques de la composition de l'exemple 1, une composition 2 ne contenant que du chlorure de sodium et des herbes a été réalisée. Cette composition comprend 10% en poids d'un mélange d'herbes identique à celui de l'exemple 1. La partie minérale constitue 90% en poids de la composition et ne comprend que du sel (NaCl) fin dont les cristaux sont d'une taille allant de 200 à 500 µm.

Le test gustatif suivant a été mené comme suit :
7 personnes ont participé au test. Des œufs durs et des tomates crues ont servi de support gustatif au condiment. Les condiments 1 et 2 ont été présentés dans des salières traditionnelles et les testeurs s'en servaient comme ils en avaient l'habitude. Les tests ont été réalisés à l'aveugle, c'est-à-dire que les testeurs ne disposaient d'aucune indication permettant d'identifier le condiment hyposodé de celle comprenant du sel (NaCl) pur.

A la suite de la dégustation les 7 testeurs ont rempli des questionnaires. Les graphiques 1 et 2 de la Figure 1 montrent le résultat de ces questionnaires sous forme de tableaux. Le goût des herbes de la composition atteint un juste équilibre, ce qui est un des effets techniques recherchés ce qui en fait un condiment hyposodé particulièrement attractif.

## Revendications

1. Un condiment hyposodé aromatisé solide comprenant, ou étant essentiellement constitué par, un mélange :
- de 19 % à 34 % en poids de NaCl ;
- de 32 % à 65 % en poids, soit de CaSO₄*2H₂O, soit d'un mélange de CaSO₄*2H₂O et de MgSO4*7H₂O; et
- de 1% à 15 % en poids d'un composé organique aromatique, ledit composé étant choisi dans le groupe constitué par les herbes aromatiques ; les proportions des composés du mélange étant données par rapport au poids total dudit condiment.

2. Le condiment hyposodé selon la revendication 1, ledit condiment comprenant, ou étant essentiellement constitué par, un mélange :
- de 19 % à 32 % en poids de NaCl ;
- de 32 % à 53 % en poids de CaSO₄*2H₂O ;
- de 1 % à 12 % en poids de MgSO4*7H₂O; et
- de 2 % à 14 % en poids d'un composé organique aromatique ; les proportions des composés du mélange sont données par rapport au poids total dudit condiment.

3. Le condiment hyposodé selon la revendication 1 ou 2, où ledit NaCl se présente pour moitié sous la forme de grains de sel très fins, dont la taille des grains est inférieure à 250 µm, et pour moitié de gros sel, dont la taille des grains va de 1,25 à 2 mm, cette proportion relative dudit sel très fin et dudit gros sel étant en poids.

4. Le condiment hyposodé selon l'une quelconque des revendications 1 à 3, où ledit composé organique aromatique est choisi dans le groupe constitué du basilic, du cerfeuil, de la ciboulette, de la coriandre, de l'estragon, du laurier, de la livèche, de la marjolaine, de la menthe, de la menthe poivrée, du persil, du romarin, de la sarriette, de la sauge, du thym et de leurs mélanges.

5. Le condiment hyposodé selon la revendication 4, où ledit composé organique aromatique est un mélange de sauge, de sarriette, de thym et d'estragon.

6. Le condiment hyposodé selon l'une quelconque des revendications 1 à 5, où ledit composé organique aromatique comprend au moins un tiers, de préférence la moitié ou au moins la moitié, de son poids par rapport au poids total dudit composé organique aromatique sous la forme de particules dont la taille est supérieure à 800µm, de préférence supérieure à 1mm, avantageusement de 1 à 3 mm.

7. Le condiment hyposodé selon la revendication 6, où ledit condiment ne comprend pas d'agent antiagglomérant ou d'agent de coulabilité.

8. Le condiment hyposodé selon l'une quelconque des revendications 1 à 7, où ledit condiment ne contient pas de chlorure de potassium.

9. Utilisation d'un mélange comprenant, ou étant essentiellement constitué par, un mélange :
- de 19 % à 34 % en poids de NaCl ;
- de 32 % à 65 % en poids soit de CaSO₄*2H₂O, soit d'un mélange de CaSO₄*2H₂O et de MgSO4*7H₂O; et
- de 1% à 15 % en poids d'un composé organique aromatique ;
ledit composé étant choisi dans le groupe constitué par les herbes aromatiques ;
les proportions de ces composés étant données par rapport au poids total dudit condiment, dans le domaine culinaire et l'industrie alimentaire.

10. Procédé d'aromatisation d'un aliment, ledit procédé comprenant l'adjonction du condiment hyposodé décrit aux revendications 1 à 8 audit aliment.

11. Procédé de fabrication d'un condiment tel que décrit à l'une quelconque des revendications 1 à 8, ledit procédé comprenant le mélange mécanique desdits composants jusqu'à l'obtention d'un mélange homogène et de préférence comprenant une étape, subséquente ou simultanée, d'ajout d'eau audit mélange dans une proportion de 0.5 à 1% du poids total du condiment.

## Patentansprüche

1. Festes aromatisiertes natriumarmes Gewürz, umfassend oder im Wesentlichen bestehend aus einer Mischung:
- aus 19 bis 34 Gew.-% NaCl;
- aus 32 bis 65 Gew.-% entweder CaSO₄*2H₂O oder einer Mischung aus CaSO₄*2H₂O und MgSO4*7H₂O; und
- aus 1 bis 15 Gew.-% einer aromatischen organischen Verbindung, wobei die Verbindung aus der Gruppe ausgewählt ist, die aus den aromatischen Kräutern besteht; wobei die Anteile der Verbindungen der Mischung relativ zum Gesamtgewicht des Gewürzes angegeben sind.

2. Natriumarmes Gewürz nach Anspruch 1, wobei das Gewürz umfasst oder im Wesentlichen besteht aus einer Mischung:
- aus 19 bis 32 Gew.-% NaCl;
- aus 32 bis 53 Gew.-% CaSO₄*2H₂O;
- aus 1 bis 12 Gew.-% MgSO4*7H₂O; und
- aus 2 bis 14 Gew.-% einer aromatischen organischen Verbindung; wobei die Anteile der Verbindungen der Mischung relativ zum Gesamtgewicht des Gewürzes angegeben sind.

3. Natriumarmes Gewürz nach Anspruch 1 oder 2, wobei das NaCl zur Hälfte in Form sehr feiner Salzkörner mit einer Korngröße von weniger als 250 µm und zur Hälfte als grobes Salz mit einer Körnergröße von 1,25 bis 2 mm vorliegt, wobei dieser relative Anteil des sehr feinen Salzes und des groben Salzes nach Gewicht ist.

4. Natriumarmes Gewürz nach einem der Ansprüche 1 bis 3, wobei die aromatische organische Verbindung aus der Gruppe ausgewählt ist, die aus Basilikum, Kerbel, Schnittlauch, Koriander, Estragon, Lorbeer, Liebstöckel, Majoran, Minze, Pfefferminze, Petersilie, Rosmarin, Bohnenkraut, Salbei, Thymian und deren Mischungen besteht.

5. Natriumarmes Gewürz nach Anspruch 4, wobei die aromatische organische Verbindung eine Mischung aus Salbei, Bohnenkraut, Thymian und Estragon ist.

6. Natriumarmes Gewürz nach einem der Ansprüche 1 bis 5, wobei die aromatische organische Verbindung mindestens ein Drittel, vorzugsweise die Hälfte oder mindestens die Hälfte ihres Gewichts relativ zum Gesamtgewicht der aromatischen organischen Verbindung in Form von Teilchen umfasst, deren Größe größer als 800 µm, stärker bevorzugt größer als 1 mm, noch stärker bevorzugt 1 bis 3 mm ist.

7. Natriumarmes Gewürz nach Anspruch 6, wobei das Gewürz kein Trennmittel oder Rieselmittel umfasst.

8. Natriumarmes Gewürz nach einem der Ansprüche 1 bis 7, wobei das Gewürz kein Kaliumchlorid enthält.

9. Verwendung einer Mischung, umfassend oder im Wesentlichen bestehend aus einer Mischung:
- aus 19 bis 34 Gew.-% NaCl;
- aus 32 bis 65 Gew.-% entweder CaSO₄*2H₂O oder einer Mischung aus CaSO₄*2H₂O und MgSO4*7H₂O; und
- aus 1 bis 15 Gew.-% einer aromatischen organischen Verbindung;
wobei die Verbindung aus der Gruppe ausgewählt ist, die aus den aromatischen Kräutern besteht, wobei die Anteile dieser Verbindungen relativ zum Gesamtgewicht des Gewürzes im kulinarischen Bereich und in der Lebensmittelindustrie angegeben sind.

10. Verfahren zum Würzen eines Lebensmittels, wobei das Verfahren das Hinzufügen des in den Ansprüchen 1 bis 8 beschriebenen natriumarmen Gewürzes zu dem Lebensmittel umfasst.

11. Verfahren zur Herstellung eines Gewürzes nach einem der Ansprüche 1 bis 8, wobei das Verfahren das mechanische Mischen der Bestandteile bis zum Erhalt einer homogenen Mischung umfasst und vorzugsweise einen nachfolgenden oder gleichzeitigen Schritt der Zugabe von Wasser zu der Mischung in einem Anteil von 0,5 bis 1 % des Gesamtgewichts des Gewürzes von Wasser zu der Mischung umfasst.

## Claims

1. Solid, flavored, low-sodium condiment, comprising, or consisting substantially of, a mixture:
- having 19% to 34% by weight of NaCl;
- having 32% to 65% by weight either of CaSO₄*2H₂O or of a mixture of CaSO₄*2H₂O and MgSO4*7H₂O; and
- having 1% to 15% by weight of an organic aromatic compound, said compound being selected from the group consisting of aromatic herbs; the proportions of the compounds in the mixture being given relative to the total weight of said condiment.

2. Low-sodium condiment according to claim 1, said condiment comprising, or consisting substantially of, a mixture:
- having 19% to 32% by weight of NaCl;
- having 32% to 53% by weight of CaSO₄*2H₂O;
- having 1% to 12% by weight of MgSO4*7H₂O; and
- having 2% to 14% by weight of an organic aromatic compound; the proportions of the compounds in the mixture being given relative to the total weight of said condiment.

3. Low-sodium condiment according to either claim 1 or claim 2, wherein said NaCl is half in the form of very fine grains of salt, the grain size of which is less than 250 µm, and half in the form of coarse salt, the grain size of which ranges from 1.25 to 2 mm, this relative proportion of said very fine salt and said coarse salt being by weight.

4. Low-sodium condiment according to any of claims 1 to 3, wherein said organic aromatic compound is selected from the group consisting of basil, chervil, chives, cilantro, tarragon, bay leaf, lovage, marjoram, mint, peppermint, parsley, rosemary, savory, sage, thyme, and mixtures thereof.

5. Low-sodium condiment according to claim 4, wherein said organic aromatic compound is a mixture of sage, savory, thyme, and tarragon.

6. Low-sodium condiment according to any of claims 1 to 5, wherein at least one third, preferably half or at least half, of the weight of said organic aromatic compound relative to the total weight of said organic aromatic compound is in the form of particles of which the size is greater than 800 µm, preferably greater than 1 mm, advantageously from 1 to 3 mm.

7. Low-sodium condiment according to claim 6, wherein said condiment does not comprise anti-caking agent or flow agent.

8. Low-sodium condiment according to any of claims 1 to 7, wherein said condiment does not contain potassium chloride.

9. Use of a mixture comprising, or consisting substantially of, a mixture:
- having 19% to 34% by weight of NaCl;
- having 32% to 65% by weight either of CaSO₄*2H₂O or of a mixture of CaSO₄*2H₂O and MgSO4*7H₂O; and
- having 1% to 15% by weight of an organic aromatic compound, said compound being selected from the group consisting of aromatic herbs,
the proportions of these compounds being given relative to the total weight of said condiment, in the culinary field and the food industry.

10. Method of flavoring a food, said method comprising adding the low-sodium condiment described in claims 1 to 8 to said food.

11. Method of producing a condiment as described in any of claims 1 to 8, said method comprising mechanically mixing said components until a homogeneous mixture is obtained, and preferably comprising a subsequent or simultaneous step of adding water to the mixture in a proportion of 0.5 to 1% of the total weight of the condiment.
